# EUROPEAN PATENT APPLICATION

(11) **EP 4 745 429 A1**
(43) Date of publication of application: **20.05.2026**
(21) Application number: 25215595.7
(22) Date of filing: 13.11.2025
(51) Int. Cl.: F16H 1/28, F16H 57/08, F16H 1/46, F16H 57/12

(54) **PLANETARY CARRIER ASSEMBLY, PLANETARY REDUCER AND ASSEMBLY OF PLANETARY REDUCER AND BACKLASH ELIMINATING INSTALLATION METHOD**

(30) Priority: 14.11.2024 CN 202411627792
(71) Applicant: AICI Precision (Shenzhen) Co., Ltd., Shenzhen, Guangdong 518000 (CN)
(72) Inventor: LING, Zilong, SHENZHEN, GUANGDONG, 518000 (CN)
(74) Representative: Cabinet Beau de Loménie

(57) **Abstract**

The present invention discloses a planetary carrier assembly, a planetary reducer assembly, and a backlash eliminating installation method. The planetary carrier assembly includes a first frame (2, 3) and a second frame (4, 5) located in the first frame. Planetary gears (6) are fixed to the second frame through bearings. Two end faces of the second frame and two end faces of the first frame that are close to the second frame are respectively installed and fixed in cooperation through fasteners (17, 18). At least part of the second frame is of an elastic structure and/or a split structure so as to achieve elastic deformation. In the expansion process of the second frame, first planetary gears (6) and a fixed ring gear can engage with each other tightly. Before a sun gear (8) is installed on a planetary reducer, pitch diameters of axle centers of the planetary gears (6) on the second frame are increased by an expansion tool.

## Description

### TECHNICAL FIELD

The present invention belongs to planetary transmission devices, and specifically relates to a planetary carrier assembly a planetary reducer assembly, and a planetary reducer that are capable of being installed by a backlash eliminating installation method, and a backlash eliminating installation method.

### BACKGROUND ART

As electronic devices in fields such as robots and medical instruments become increasingly precise, the requirements for reducers in the prior art become higher and higher.

In the prior art, dual gears are used for NW type planetary gear systems, where a main gear externally engages with a sun gear to obtain a certain transmission ratio *i*₁, and then a pinion gear internally engages with an inner ring gear to obtain a certain transmission ratio *i*₂; and a final gear transmission ratio is *i*₁ × *i*₂.

The conventional planetary transmission devices may lead to problems such as low transmission precision and large backlashes due to errors in processing and assembly of gears.
CN113757349A discloses a planetary transmission device with a displacement planetary carrier system, which utilizes an expansion sleeve type flexible planetary carrier to continuously adjust center distances between planetary gears and an inner ring gear to reduce clearances, so as to provide a high-precision transmission device with reduced parts for planetary carrier adjustment and minimized initial assembly clearance during assembly.

### SUMMARY OF THE INVENTION

The present invention aims to provide a planetary carrier assembly, a planetary reducer assembly and a planetary reducer that are capable of being installed by a backlash eliminating installation method, and a backlash eliminating installation method. The planetary carrier assembly has a rigid carrier body on an outer side and a flexible carrier body on an inner side, allowing for backlash eliminating installation method. An expansion tool and fasteners are used during assembly. Firstly, a second frame is installed in a first frame in a clearance fit manner, pitch diameters of the planetary gears on the second frame are increased, moving planetary gears radially to tightly engage with a ring gear; and subsequently, relative positions of the first frame and the second frame are fixed through the fasteners, and finally the expansion tool is detached, so as to achieve backlash eliminating installation.

The objective of the present invention is achieved by the following technical solution:

In a first aspect, the present invention discloses a planetary carrier assembly, including a first frame and a second frame located in the first frame, where planetary gears are fixed to the second frame through bearings, two end faces of the second frame and two end faces of the first frame that are close to the second frame are respectively mounted through fasteners, and at least part of carrier plates of the second frame are of an elastic structure and/or a split structure, and can change positions of planetary shafts under the action of external force before the second frame is fastened with the first frame. In the present invention, the planetary carrier assembly mainly changes radial positions of the planetary shafts, eliminating clearances between the planetary gears and fixed ring gear during engagement; and meanwhile, in the process of changing the radial positions, the planetary carrier assembly can further change circumferential positions of the planetary shafts under the constraint of tooth engagement, so as to overcome processing errors of shaft holes of a planetary carrier, thereby achieving perfect engagement between the planetary gears and fixed ring gear.

In a second aspect, the present invention discloses a planetary reducer assembly comprising planetary gears and fixed ring gear capable of being installed by a backlash eliminating installation method, comprising a fixed ring gear, rollers, first planetary gears, and the above planetary carrier assembly, where staggered notches are formed in the carrier plates of a second frame, or the second frame is separated at least two parts along its radial direction to form a split structure, such that the second frame can achieve deformation accordingly, and during the expansion process of the second frame, the first planetary gears and the fixed ring gear are engaged with each other more tightly; and a first frame is rotatably arranged in the fixed ring gear, and a slewing bearing is formed by the first frame and the fixed ring gear through the rollers.

In a third aspect, the present invention discloses a planetary reducer, including the above planetary reducer assembly comprising the planetary gears and the fixed ring gear capable of being installed by the backlash eliminating installation method and further including a sun gear and second planetary gears, where the sun gear serves as power input, while a planetary carrier assembly serves as power output; and during operation, the sun gear drives the second planetary gears, the second planetary gears drive first planetary gears to be in rolling engagement with a fixed ring gear on the fixed ring gear, the first planetary gears drive a second frame to rotate through rollers, two end faces of the second frame are respectively connected with two end faces of a first frame that are close to the second frame in a fastened manner through bolts, and a first upper carrier plate of the first frame serves as an output end for reduction drive.

Furthermore, when the planetary reducer including the second planetary gears operates, the sun gear drives the second planetary gears, the second planetary gears drive the first planetary gears to be in rolling engagement with the fixed ring gear on the fixed ring gear, the first planetary gears drive the second frame to rotate through needle bearings, the two end faces of the second frame are respectively connected with the two end faces of the first frame that are close to the second frame in a fastened manner through the bolts, and the first upper carrier plate of the first frame serves as the output end for reduction drive.

In an embodiment, the planetary reducer further comprises a sun gear drive gear and an offset input gear besides the second planetary gears. The sun gear drive gear and the sun gear are coaxially fixed, and the sun gear drive gear engages with the offset input gear.

Preferably, when pitch diameters are increased by an expansion tool, the fixed ring gear and the first planetary gears backlash-free engage with each other.

In a fourth aspect, the present invention discloses a planetary reducer, including the above planetary reducer assembly including the planetary gears and the fixed ring gear capable of being installed by the backlash eliminating installation method and further including a sun gear, where when the planetary reducer operates, the sun gear serves as power input, while a planetary carrier assembly serves as power output; and the sun gear drives first planetary gears, the first planetary gears are in rolling engagement with a ring gear, the first planetary gears drive a second frame to rotate through rollers, two end faces of the second frame are respectively connected to two end faces of a first frame that are close to the second frame in a fastened manner through bolts, and a first upper carrier plate of the first frame serves as an output end for reduction drive.

Furthermore, when the planetary reducer operates, the sun gear drives the first planetary gears, the first planetary gears are in rolling engagement with the fixed ring gear, the first planetary gears drive the second frame to rotate through needle bearings, the two end faces of the second frame are respectively connected to the two end faces of the first frame that are close to the second frame in a fastened manner through the bolts, and the first upper carrier plate of the first frame serves as the output end for reduction drive.

Furthermore, in an embodiment, the planetary reducer further includes a preceding-stage planetary reducer assembly, the preceding-stage planetary reducer assembly comprises a second ring gear, a second planetary carrier, preceding-stage planetary gears, and a second sun gear, where the second ring gear is fixedly connected to a first lower carrier plate through bolts, the second planetary carrier is splined connected to the sun gear in a fastened manner, and the second sun gear drives the sun gear to rotate by driving the second planetary carrier.

In an embodiment, the expansion tool is inserted into corresponding shaft holes of the first frame and the second frame, to expand an outer diameter of the expansion tool to press against the wall of the shaft holes, thereby increasing the pitch diameters of the axle centers of the planetary gears on the second frame with the notches; and during the expansion process of the planetary carrier, center distances between the planetary gears and the fixed ring gear become larger, achieving tighter engagement there between..

In an embodiment, when the backlash eliminating installation method is used during installation, required radius expansion dimension when the expansion tool is used for expanding the second frame shall not exceed half of a tooth height of the planetary gear, such that a large adjustment stroke is not required for the expansion tool. Under the condition that various parts of a planetary transmission device are high-precision components, the notches are only need to be machined to achieve micro elastic deformation in a second upper carrier plate and a second lower carrier plate of the second frame.

Preferably, the first frame is a rigid carrier, including a first upper carrier plate and a first lower carrier plate, the first upper carrier plate and the first lower carrier plate are connected in a fastened manner through bolts, and spaces inside the first upper carrier plate and the first lower carrier plate are used for accommodating the first planetary gears and the second frame;

the second frame is a flexible carrier, including a second upper carrier plate and a second lower carrier plate, groove notches are provided in the second upper carrier plate and the second lower carrier plate, and the notches are used for inducing elastic deformation in the second upper carrier plate and the second lower carrier plate, and can elastically increase pitch diameters of axle centers of the planetary gears on the second upper carrier plate and the second lower carrier plate; and
shaft holes are formed in corresponding positions of middles of the first frame and the second frame and used for allowing the sun gear or an expansion tool to be inserted therein.

**In** another embodiment, the second frame is a flexible carrier, including a second upper carrier plate and a second lower carrier plate, the second upper carrier plate and the second lower carrier plate are separated at least two parts along their radial directions to form a split structure, and the split structure is used for inducing deformation in the second upper carrier plate and the second lower carrier plate, and can elastically increase pitch diameters of axle centers of the planetary gears on the second upper carrier plate and the second lower carrier plate.

Furthermore, corresponding first holes are formed in the first upper carrier plate and the first lower carrier plate, and the first upper carrier plate and the first lower carrier plate are fixedly connected by inserting first bolts into the first holes; and corresponding second holes are formed in the first upper carrier plate and the second upper carrier plate/the first lower carrier plate and the second lower carrier plate, the first upper carrier plate and the second upper carrier plate/the first lower carrier plate and the second lower carrier plate are fixedly connected respectively by inserting second bolts into the second holes, diameters of the second holes in the first frame are slightly larger than those of the bolts, and therefore the second frame can still match with the second holes therein after being expanded.

Specifically, a plurality of second through holes are formed in the first upper carrier plate and the first lower carrier plate, and a plurality of second threaded holes are formed in the second upper carrier plate and the second lower carrier plate; first through holes are formed in the first upper carrier plate, and first threaded holes corresponding to the first through holes are formed in the first lower carrier plate; where the first bolts sequentially penetrate through the first through holes in the first upper carrier plate and the first threaded holes in the first lower carrier plate to fixedly connect the first upper carrier plate and the first lower carrier plate in a bolted manner, the second bolts sequentially penetrate through the second through holes in the first upper carrier plate and the second threaded holes in the second upper carrier plate or sequentially penetrate through the second through holes in the first lower carrier plate and the second threaded holes in the second lower carrier plate to connect the first upper carrier plate and the second upper carrier plate/the first lower carrier plate and the second lower carrier plate in a threaded manner, diameters of the second through holes in the first upper carrier plate are slightly larger than those of the bolts, and therefore the second frame can still match with the second threaded holes therein after being expanded.

Preferably, the first lower carrier plate includes an annular body and support pillars, a plurality of receding holes are formed in the annular body, and each support pillar is placed at every two receding holes; and the second upper carrier plate and the second lower carrier plate each include an annular structure and three bosses radially extending along an outer wall of the annular structure, a through hole is formed in each boss to serve as a planetary shaft hole, and the first planetary gears are fixed to the second frame through bearings.

Furthermore, the bosses on the second upper carrier plate and the second lower carrier plate correspond to each other, and the bosses on the second upper carrier plate and the second lower carrier plate are just located between the adjacent support pillars on the first lower carrier plate; and outer contours of the bosses are in clearance fit with the receding holes.

Preferably, a pair of staggered notches in a radial direction of the second upper carrier plate are respectively processed in a side wall of the annular structure, on which no bosses are arranged, the two staggered notches are opposite, and a depth sum of each pair of staggered notches is greater than axial wall thicknesses before the notches are processed in notch positions of the second upper carrier plate.

Preferably, the side wall of the annular structure, on which no bosses are arranged, is separated along its radial direction of the second upper carrier plate into two or more parts, such that the second frame forms a split structure.

In a third aspect, the present invention further includes a backlash eliminating installation method for the above planetary reducer assembly, including the steps:
fastening a first frame with first bolts and connecting the first frame to a second frame through second bolts being in a loose and untightened state before a sun gear is installed on the planetary reducer assembly, and installing the second frame in the first frame in a clearance fit manner;
expanding the pitch diameters of axle centers of planetary gears on the second frame by an expansion tool to reduce engagement clearances between a fixed ring gear and first planetary gears; and
when the first ring gear and the first planetary gears are in tight engagement, tightening the second bolts to allow adjacent end faces of the first frame and the second frame to be in contact, and then installing other assemblies after the expansion tool is removed.

The expansion tool may be selected from an expansion sleeve matching with second holes of the second frame, more preferably, selected from a hydraulic expansion sleeve, a pneumatic expansion sleeve, or a mechanical expansion sleeve.

Compared with the prior art, the technical solution of the present invention has the following beneficial effects:
the planetary reducer of the present invention can expand the circumference of the planetary carrier during installation and increase revolution radii of the planetary gears, such that the planetary gears lean against an inner ring gear to compress side clearances between the planetary gears and the inner ring gear, and reduce planetary transmission back clearances; and
meanwhile, the expansion tool for expanding the planetary carrier is only used during installation, and the planetary reducer is not additionally provided with any expansion device, which is beneficial to reducing structural complexity thereof.

### BRIEF DESCRIPTION OF THE DRAWINGS

FIG. 1 is an exploded view of a planetary carrier assembly shown in Embodiment 1;
FIG. 2 is a sectional view of a planetary carrier assembly shown in Embodiment 1;
FIG. 3 is a sectional view of an NW type planetary reducer shown in Embodiment 2;
FIG. 4 is an exploded view of the NW type planetary reducer shown in FIG. 3;
FIG. 5 is an exploded view of an NW type planetary reducer shown in Embodiment 3;
FIG. 6 is a sectional view of the NW type planetary reducer shown in FIG. 5;
FIG. 7 is an exploded view of an NGW type planetary reducer shown in Embodiment 4;
FIG. 8 is an exploded view of the NGW type planetary reducer shown in FIG. 7;
FIG. 9 is an exploded view of an NGW type planetary reducer shown in Embodiment 5; and
FIG. 10 is a sectional view of the NGW type planetary reducer shown in FIG. 9.

In the drawings:
1: fixed ring gear, 2: first upper carrier plate, 3: first lower carrier plate, 4: second upper carrier plate, 5: second lower carrier plate, 6: first planetary gear, 7: second planetary gear, 8: sun gear, 9: planetary shaft, 10: shaft hole; 11: sun gear drive gear, 12: offset input gear, 13: first through hole, 13a: first threaded hole, 14: second through hole, 14a: second threaded hole, 15: staggered notch, 16: strut, 17: first bolt, 18: second bolt, 19: receding hole, 20: needle bearing, 21: oil seal, 23: second ring gear, 24: second planetary carrier, 25: second sun gear, and 26: preceding-stage planetary gear.

### DETAILED DESCRIPTION OF THE EMBODIMENTS

In order to make the objectives, technical solutions, beneficial effects, and significant progress of the embodiments of the present invention clearer, the technical solutions in the embodiments of the present invention will be clearly and completely described below with reference to the drawings in the embodiments of the present invention; apparently, all these described embodiments are merely part, rather than all of the embodiments of the present invention; and all other embodiments obtained by those ordinarily skilled in the art without involving inventive efforts based on the embodiments in the present invention fall within the scope of protection of the present invention.

### Embodiment 1

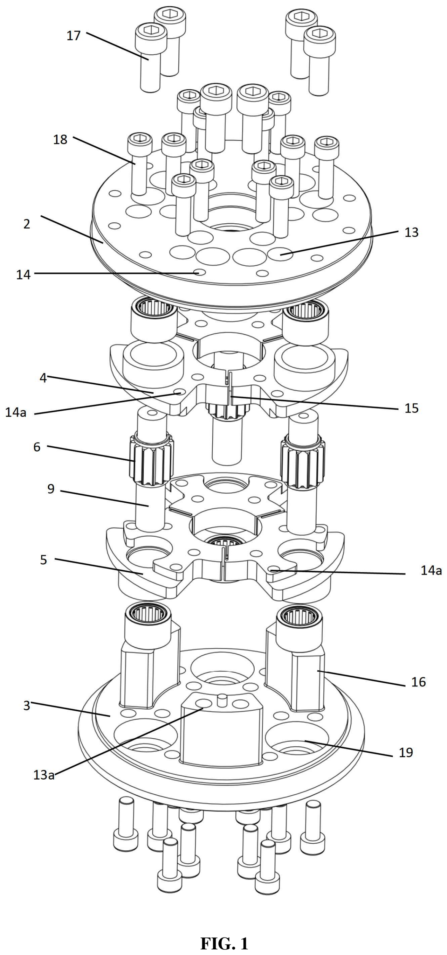

As shown in FIGS. 1-2, a planetary carrier assembly capable of being installed by a backlash eliminating installation method, includes a planetary carrier assembly and first planetary gears 6. The three first planetary gears 6 are arranged in the planetary carrier assembly through planetary shafts 9.

The planetary carrier assembly is of a structure where two frames are sleeved from outside to inside, including a first frame and a second frame. The first frame is a rigid carrier, the second frame is a flexible carrier, the first frame and the second frame are coaxially arranged, and a certain interval is kept therebetween. The first frame includes an annular first upper carrier plate 2 and an annular first lower carrier plate 3. The first upper carrier plate 2 is of an annular structure. A plurality of second through holes 14 are formed in the first upper carrier plate 2 and the first lower carrier plate 3. First through holes 13 are formed in the first upper carrier plate 2. First threaded holes 13a corresponding to the first through holes 13 are formed in the first lower carrier plate 3. First bolts 17 sequentially penetrate through the first through holes 13 in the first upper carrier plate 2 and the first threaded holes 13a in the first lower carrier plate 3 to fixedly connect the first upper carrier plate 2 and the first lower carrier plate 3 in a bolted manner. Spaces inside the first upper carrier plate 2 and the first lower carrier plate 3 are used for accommodating the planetary shafts 9, the first planetary gears 6, and the second frame. Shaft holes 10 are formed in corresponding positions of middles of the first frame body 2, the second upper carrier plate 4, the second lower carrier plate 5, and the first lower carrier plate 3, and the shaft holes 10 are used for allowing a sun gear 8 or an expansion tool to be inserted therein.

The first lower carrier plate 3 includes an annular body and support pillars 16. The support pillars 16 are arranged on a surface, towards the first upper carrier plate 2, of the first lower carrier plate 3. Receding holes 19 and second through holes 14 are formed in the annular body of the first lower carrier plate 3. The support pillars 16 are placed at every two receding holes 19. First threaded holes 13a are formed in top ends of the support pillars 16 and used for allowing the first lower carrier plate 3 to be fixedly connected to a bottom face of the first upper carrier plate 2 through the first bolts 17. The first through holes 13 and the second through holes 14 in the first lower carrier plate 3 are all through holes. A roller way for rollers is arranged at positions, opposite to a fixed ring gear 1, of the first upper carrier plate 2 and the first lower carrier plate 3. The second frame includes a second upper carrier plate 4 and a second lower carrier plate 5. A plurality of second threaded holes 14a are formed in the second upper carrier plate 4 and the second lower carrier plate 5. Positions and sizes of the second threaded holes 14a in the second upper carrier plate 4 and the second lower carrier plate 5 correspond to those of the second through holes 14 in the first frame. The second upper carrier plate 4 includes an integrally-formed annular structure and three bosses evenly and radially extending along an outer wall of the annular structure. A through hole is formed in each boss to serve as a planetary shaft hole to mount the planetary shaft 9, one first planetary gear 6 is arranged on an outer wall of each planetary shaft 9, and the first planetary gears 6 are fixed to the second frame through bearings.

A pair of staggered notches 15 in an axial direction of the second upper carrier plate 4 are respectively processed in a side wall of the annular structure, on which no bosses are arranged, the two staggered notches are opposite, and a depth sum of each pair of staggered notches is greater than axial wall thicknesses before the notches are processed in notch positions of the second upper carrier plate 4. The notches 15 are groove notches. The notches are formed for enabling the second upper carrier plate 4 to undergo micro elastic deformation, so as to elastically increase pitch diameters of axle centers of the planetary shafts on the second upper carrier plate 4.

In addition to the above description, the notches 15 may also be machined in a radial direction. Various structures that can achieve micro elastic deformation of the second upper carrier plate 4 are provided, the above descriptions are only exemplary examples, however, the essence is to increase the pitch diameters of the axle centers of the planetary gears on the carrier body, so that various types of notches that can be stretched can be processed, in addition, the notches that can be stretched are preferably staggered from the bosses with the planetary shaft holes, which is conducive to evenly lengthening distances between the planetary gears, and the planetary gears can better move in a radius direction without changing their distribution phases when a planetary carrier expands.

Structures of the second lower carrier plate 5 and the second upper carrier plate 4 are the same or arranged in a horizontally mirrored manner, which will not be repeated here.

During installation, the bosses on the second upper carrier plate 4 and the second lower carrier 5 correspond to each other, and the bosses on the second upper carrier plate 4 and the second lower carrier plate 5 are just located between the adjacent support pillars 16 on the first lower carrier plate 3; and outer contours of the bosses match with a space between every two adjacent support pillars.

When the planetary carrier assembly in this embodiment is installed in the fixed ring gear, an installation method for the planetary carrier assembly capable of being installed by a backlash eliminating installation method includes the following steps:
step 1: before the sun gear is installed, the second upper carrier plate 4 and the second lower carrier plate 5 are arranged in the first frame and assembled into the second frame (at this step, the second upper carrier plate 4 and the second lower carrier plate 5 are not fixed), the first upper carrier plate 2 and the first lower carrier plate 3 are aligned, the first planetary gears 6 are arranged on outer walls of the planetary shafts, and the planetary shafts are arranged in the first frame and the second frame;
then the first bolts 17 are sequentially screwed into the first through holes 13 in the first upper carrier plate 2 and the first threaded holes 13a in the first lower carrier plate 3 and tightened, so as to fix the first upper carrier plate 2 and the first lower carrier plate 3, such that the fastened first frame is formed;
the second bolts 18 are sequentially screwed into the second through holes 14 in the first upper carrier plate 2 and the second threaded holes 14a in the second upper carrier plate 4 and sequentially screwed into the second through holes 14 in the first lower carrier plate 3 and the second threaded holes 14a in the second lower carrier plate 5, where the second bolts 18 are kept in a loose and untightened state; and
as a result, the fixed ring gear 1 and the first planetary shafts 6 are in clearance engagement, a clearance is formed between a bottom face of the first upper carrier plate 2 and a top face of the second upper carrier plate 4 (namely, adjacent end faces), and a clearance is formed between a top face of the first lower carrier plate 3 and a bottom face of the second lower carrier plate 5.

Step 2: after the expansion tool sequentially penetrates through the shaft holes 10 in the middles of the first upper carrier plate 2, the second upper carrier plate 4, the second lower carrier plate 5, and the first lower carrier plate 3, the outer diameter of the expansion tool is expanded to press against the walls of the shaft holes of the carrier plate in contact therewith, the second upper carrier plate 4 and the second lower carrier plate 5 with the notches 15 are expanded by the expansion tool, so as to elastically increase the pitch diameters of the axle centers of the planetary gears on the second upper carrier plate 4 and the second lower carrier plate 5, and the center distances between the planetary gears and the ring gear are increased in the expansion process of the planetary carrier, thereby achieving tighter engagement. The expansion tool is not limited to the present invention, as long as it can increase the pitch diameters of the axle centers of the planetary gears on the second frame. Material hardness of the expansion tool is not less than that of the second upper carrier plate 4 and the second lower carrier plate 5, and an outer wall contour of the expansion tool is preferably slightly less than hole diameters of the shaft holes.

Step 3: when the fixed ring gear 1 and the first planetary gears 6 are in clearance-free engagement, the second bolts 18 are tightened, the adjacent end faces of the first frame and the second frame are in contact accordingly, and then the expansion tool is removed; and then the sun gear 8 is installed in the shaft holes of the first upper carrier plate 2, the second upper carrier plate 4, the second lower carrier plate 5, and the first lower carrier plate 3, such that the sun gear 8 engages with the first planetary gears 6.

### Embodiment 2

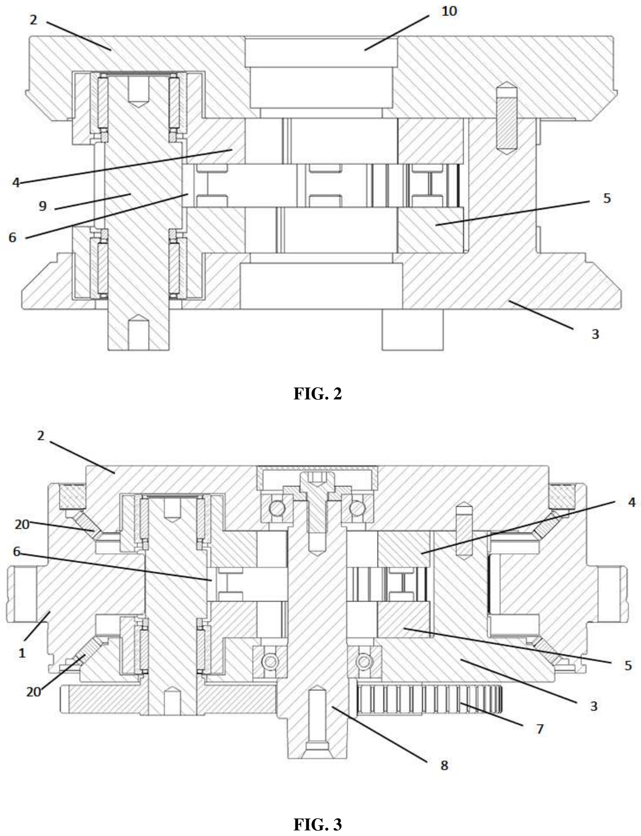

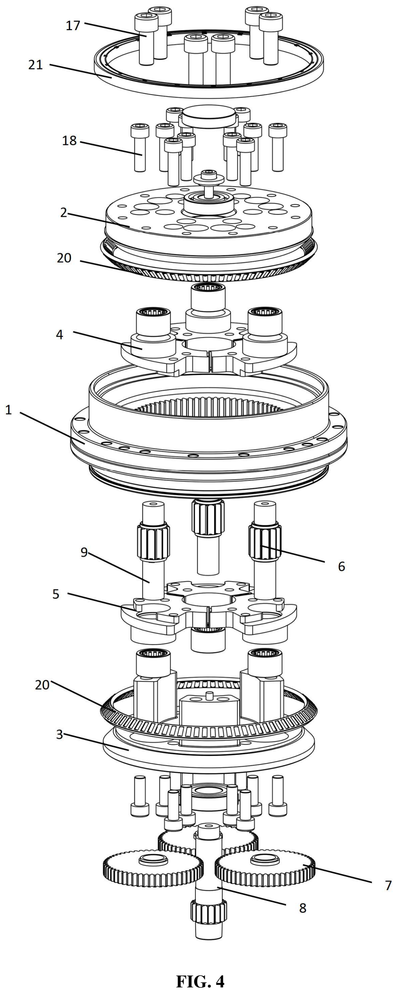

As shown in FIGS. 3-4, an NW type planetary reducer capable of being installed by a backlash eliminating installation method, includes a fixed ring gear 1, a sun gear 8, a planetary carrier assembly, first planetary gears 6, and second planetary gears 7. The planetary carrier assembly is arranged in the fixed ring gear 1, connected to an output shaft, and rotatably arranged in the fixed ring gear; the three first planetary gears 6 are arranged on the planetary carrier assembly through planetary shafts 9, and the three second planetary gears 7 are located on a side, proximal to the output shaft, of the planetary carrier assembly; and the sun gear 8 is connected to an input shaft, and engages with the second planetary gears 7.

The planetary carrier assembly is of a structure where two carriers are sleeved from outside to inside, including a first frame and a second frame. Structures of the first frame and the second frame are basically the same as those in Embodiment 1, the same structures are not repeated here, and only distinguishing parts are described below.

Opposite faces of the first upper carrier plate 2 and the first ring gear 1 are both slopes, the slope on the fixed ring gear 1 serves as a fixed end guide face, the slope of the first upper carrier plate 2 serves as an output end guide face, and needle bearings 20 are arranged between the fixed end guide face and the output end guide face to enable the two guide faces to relatively slide. Similarly, opposite faces of the first lower carrier plate 3 and the first ring gear 1 are both slopes, the slope on the fixed ring gear 1 serves as a fixed end guide face, the slope of the first lower carrier plate 3 serves as an output end guide face, and needle bearings 20 are arranged between the fixed end guide face and the output end guide face to enable the two guide faces to relatively slide.

An oil seal 21 is arranged between an outer wall of the first upper carrier plate 2 and an inner wall of the fixed ring gear 1, which is used for improving sealing performance.

When the planetary reducer operates, the sun gear 8 drives the second planetary gears 7, the second planetary gears 7 drive the first planetary gears 6 to be in rolling engagement with the fixed ring gear on the fixed ring gear 1, and the first planetary gears 6 drive the second upper carrier plate 4 and the second lower carrier plate 5 to rotate through the needle bearings 20. Since the second upper carrier plate 4 and the second lower carrier plate 5 are fixedly connected to the first upper carrier plate 2 and the first lower carrier plate 3, respectively, through bolts, the first upper carrier plate 2 serves as an output end for reduction drive.

An installation method for the planetary reducer capable of being installed by a backlash eliminating installation method includes the steps:
step 1: before the sun gear is installed, the second upper carrier plate 4 and the second lower carrier plate 5 are arranged in the first frame and assembled into the second frame (at this step, the second upper carrier plate 4 and the second lower carrier plate 5 are not fixed), the first upper carrier plate 2 and the first lower carrier plate 3 are aligned, the first planetary gears 6 are arranged on outer walls of the planetary shafts, and the planetary shafts are arranged in the first frame and the second frame;
then the first bolts 17 are sequentially screwed into the first through holes 13 in the first upper carrier plate 2 and the first threaded holes 13a in the first lower carrier plate 3 and tightened, so as to fix the first upper carrier plate and the first lower carrier plate 3, such that the fastened first frame is formed;
the second bolts 18 are sequentially screwed into the second through holes 14 in the first upper carrier plate 2 and the second threaded holes 14a in the second upper carrier plate 4 and sequentially screwed into the second through holes 14 in the first lower carrier plate 3 and the second threaded holes 14a in the second lower carrier plate 5, where the second bolts 18 are kept in a loose and untightened state; and
as a result, the fixed ring gear 1 and the first planetary shafts 6 are in clearance engagement, a clearance is formed between a bottom face of the first upper carrier plate 2 and a top face of the second upper carrier plate 4 (namely, adjacent end faces), and a clearance is formed between a top face of the first lower carrier plate 3 and a bottom face of the second lower carrier plate 5.

Step 2: after the expansion tool sequentially penetrates through the shaft holes 10 in the middles of the first upper carrier plate 2, the second upper carrier plate 4, the second lower carrier plate 5, and the first lower carrier plate 3, the outer diameter of the expansion tool is expanded to press against the walls of the shaft holes of the carrier plate in contact therewith, the second upper carrier plate 4 and the second lower carrier plate 5 with the notches 15 are expanded by the expansion tool, so as to elastically increase the pitch diameters of the axle centers of the planetary gears on the second upper carrier plate 4 and the second lower carrier plate 5, and the center distances between the planetary gears and the ring gear are increased in the expansion process of the planetary carrier, thereby achieving tighter engagement. Material hardness of the expansion tool is not less than that of the second upper carrier plate 4 and the second lower carrier plate 5, and an outer wall contour of the expansion tool is preferably slightly less than hole diameters of the shaft holes.

Step 3: when the fixed ring gear 1 and the first planetary gears 6 are in tight engagement (may be clearance-free engagement or adjusted to a clearance smaller than that in step 2), the second bolts 18 are tightened, the adjacent end faces of the first frame and the second frame are in contact accordingly, and then the expansion tool is removed; and then the sun gear 8 is installed in the shaft holes of the first upper carrier plate 2, the second upper carrier plate 4, the second lower carrier plate 5, and the first lower carrier plate 3, such that the sun gear 8 engages with the second planetary gears 7.

### Embodiment 3

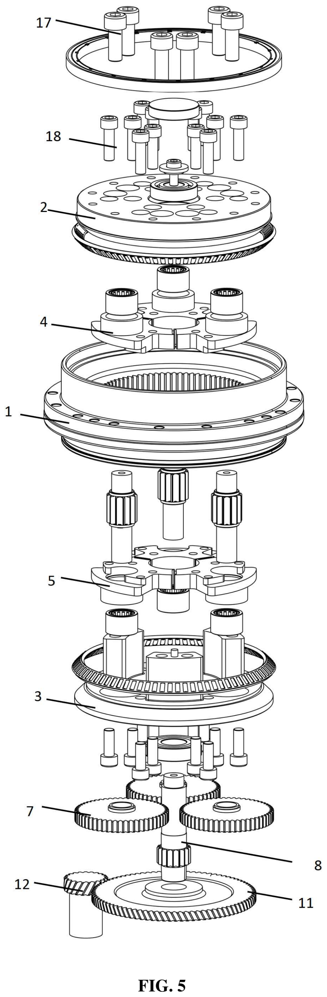

As shown in FIGS. 5-6, an NW type planetary reducer capable of being installed by a backlash eliminating installation method is basically the same as that in Embodiment 2. The same parts are not repeated here. Only distinguishing parts are described below.

The NW type planetary reducer includes a fixed ring gear 1, a sun gear 8, a planetary carrier assembly, first planetary gears 6, and second planetary gears 7. The planetary carrier assembly is arranged in the fixed ring gear 1, connected to an output shaft, and rotatably arranged in the fixed ring gear; the three first planetary gears 6 are arranged on the planetary carrier assembly through planetary shafts 9, and the three second planetary gears 7 are located on a side, proximal to the output shaft, of the planetary carrier assembly; the sun gear 8 is connected to an input shaft, and engages with the second planetary gears 7; and a sun gear drive gear 11 is tightly assembled on an outer wall of the sun gear, and engages with an offset input gear 12.

When the planetary reducer operates, the offset input gear 12 drives the sun gear drive gear 11 to rotate, so as to drive the sun gear 8 to rotate, the sun gear 8 drives the second planetary gears 7, the second planetary gears 7 drive the first planetary gears 6 to be in rolling engagement with the fixed ring gear on the fixed ring gear 1, and the first planetary gears 6 drive the second upper carrier plate 4 and the second lower carrier plate 5 to rotate through the needle bearings 20. Since the second upper carrier plate 4 and the second lower carrier plate 5 are fixedly connected to the first upper carrier plate 2 and the first lower carrier plate 3, respectively, through bolts, the first upper carrier plate 2 serves as an output end for reduction drive.

### Embodiment 4

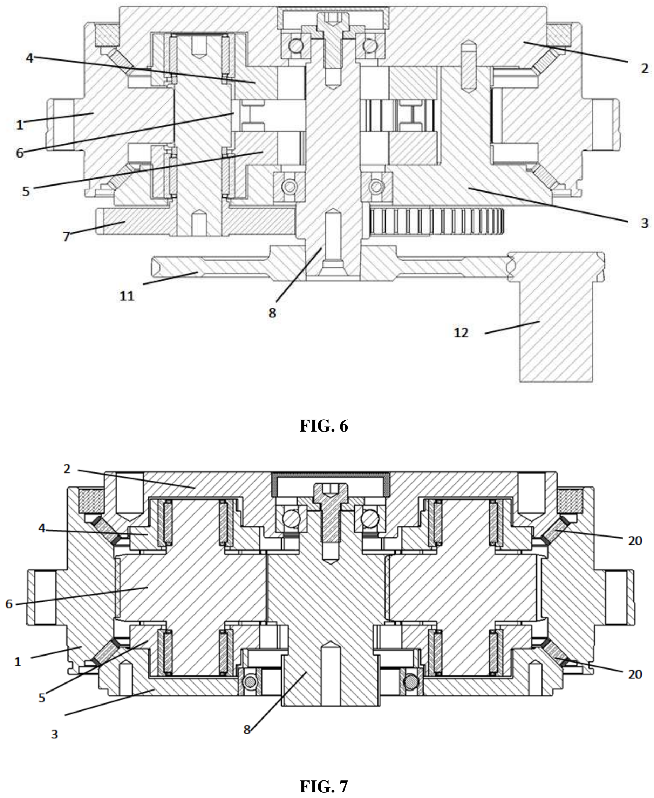

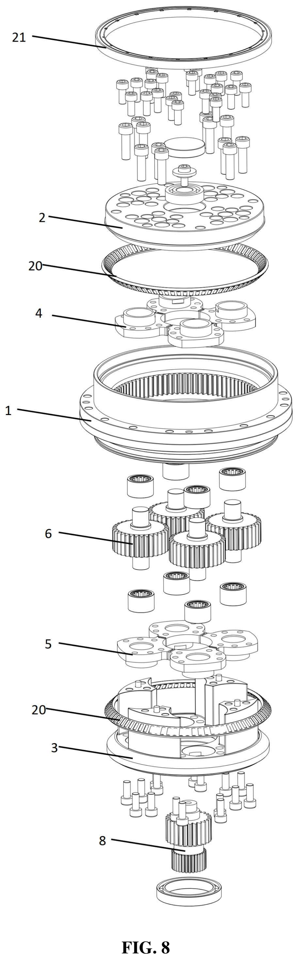

As shown in FIGS. 7-8, an NGW type planetary reducer capable of being installed by a backlash eliminating installation method, includes a fixed ring gear 1, a sun gear 8, a planetary carrier assembly, and first planetary gears 6. The planetary carrier assembly is arranged in the fixed ring gear 1, connected to an output shaft, and rotatably arranged in the fixed ring gear; the three first planetary gears 6 are arranged on the planetary carrier assembly through planetary shafts 9; and the sun gear 8 is connected to an input shaft, and engages with the first planetary gears 6. A spline for inputting torque is arranged on an outer wall of the sun gear 8.

The NGW type planetary reducer is basically the same as that in Embodiment 2. The same parts are not repeated here.

### Embodiment 5

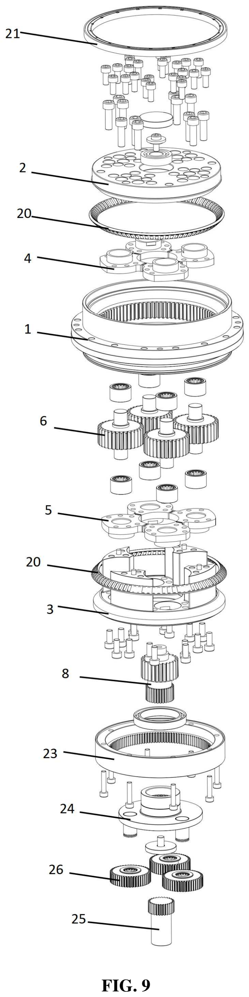

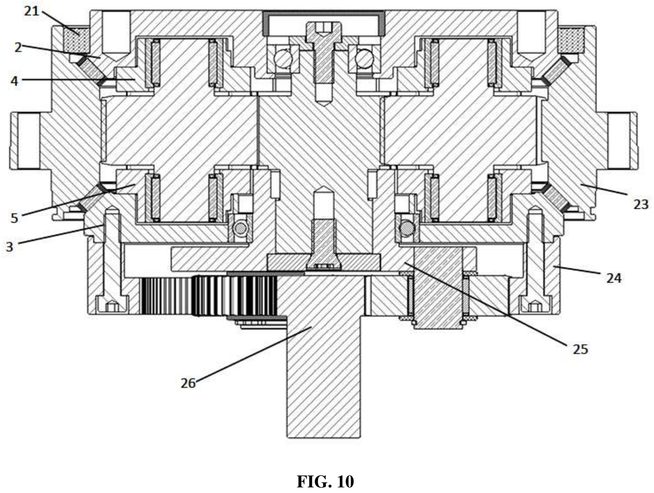

As shown in FIGS. 9-10, an NGW type planetary reducer capable of being installed by a backlash eliminating installation method is basically the same as that in Embodiment 4. The same parts are not repeated here. Only distinguishing parts are described below.

A second ring gear 23, a second planetary carrier 24, and a second sun gear 25 are additionally arranged on the NGW type planetary reducer on the basis of the planetary reducer in Embodiment 4, the second ring gear 23 is fixedly connected to the first lower carrier plate 3 through bolts, and the second planetary carrier 24 is splined connected to the sun gear 8 in a tight assembly manner. Splines for inputting torque are arranged on an outer wall of the sun gear 8.

A planetary reducer is formed by the second ring gear 23, the second planetary carrier 24, preceding-stage planetary gears 26, and the second sun gear 25, which serves as a preceding stage to drive the sun gear 8 of the NGW type planetary reducer.

Due to the small expansion stroke of the second frame, radius expansion required usually does not exceed half of a tooth height of the planetary gears, such that a large adjustment stroke is not required for the expansion tool. Under the condition that various parts of a planetary transmission device are high-precision components, the notches 15 are only need to be machined to achieve micro elastic deformation in a second upper carrier plate 4 and a second lower carrier plate 5 of the second frame.

The above embodiments are merely used for illustrating the technical solutions of the present invention instead of limiting them; although the present invention is illustrated in detail with reference to the above embodiments, those ordinarily skilled in the art should understand that they still can modify the technical solutions recorded in the above embodiments, or equivalently substitute part or all of technical features therein; and these modifications or substitutions cannot make the essence of the corresponding technical solutions depart from the scope of the technical solutions of the embodiments of the present invention; and non-essential improvements and modifications or substitutions made by those skilled in the art according to the content of the specification belong to the scope of protection of the present invention.

## Claims

1. A planetary carrier assembly, **characterized by** comprising a first frame (2, 3) and a second frame located in the first frame, wherein planetary gears (6) are fixed to the second frame through bearings, two end faces of the second frame and two end faces of the first frame that are close to the second frame are respectively mounted by fasteners (17, 18), and at least part of carrier plates (4, 5) of the second frame are of an elastic structure and/or a split structure, and can change positions of planetary shafts (9) under the action of external force before the second frame is fastened with the first frame.

2. A planetary reducer assembly comprising planetary gears and a ring gear, which is capable of being installed by a backlash eliminating installation method, **characterized by** comprising a fixed ring gear (1), rollers, first planetary gears (6), and the planetary carrier assembly according to claim 1, wherein staggered notches (15) are formed in the carrier plates (4, 5) of a second frame, or the second frame is separated at least two parts along its radial direction to form a split structure, such that the second frame can achieve deformation accordingly, and during the expansion process of the second frame, the first planetary gears (6) and the fixed ring gear (1) are engaged with each other more tightly; and a first frame is rotatably arranged in the fixed ring gear (1), and a slewing bearing is formed by the first frame and the fixed ring gear (1) through the rollers.

3. A planetary reducer, **characterized by** comprising the planetary reducer assembly according to claim 2, a sun gear (8), and second planetary gears (7), wherein the sun gear (8) serves as power input, while a planetary carrier assembly serves as power output; and during operation, the sun gear (8) drives the second planetary gears (7), the second planetary gears (7) drive first planetary gears (6) to be in rolling engagement with the fixed ring gear (1), the first planetary gears (6) drive a second frame to rotate through rollers, two end faces of the second frame are respectively connected to two end faces of a first frame that are close to the second frame in a fastened manner through bolts (17, 18), and a first upper carrier plate (2) of the first frame serves as an output end for reduction drive.

4. The planetary reducer according to claim 3, **characterized by** further comprises a sun gear drive gear (11) and an offset input gear (12), wherein the sun gear drive gear (11) and the sun gear (8) are coaxially fixed, and the sun gear drive gear (11) engages with the offset input gear (12).

5. A planetary reducer **characterized by** comprising the planetary reducer assembly according to claim 2 and a sun gear (8), wherein when the planetary reducer operates, the sun gear (8) serves as power input, while a planetary carrier assembly serves as power output; and the sun gear (8) drives first planetary gears (6), the first planetary gears (6) are in rolling engagement with a fixed ring gear (1), the first planetary gears (6) drive a second frame to rotate through rollers, two end faces of the second frame are respectively connected to two end faces of a first frame that are close to the second frame in a fastened manner through bolts (17, 18), and a first upper carrier plate (2) of the first frame serves as an output end for reduction drive.

6. The planetary reducer according to claim 5, **characterized by** further comprising a preceding-stage planetary reducer assembly comprising a second ring gear (23), a second planetary carrier (24), preceding-stage planetary gears (26), and a second sun gear (25), wherein the second ring gear (23) is fixedly connected to a first lower carrier plate (3) through bolts, the second planetary carrier (24) is connected to the sun gear (8) in a fastened manner through a spline, and the second sun gear (25) drives the sun gear (8) to rotate by driving the second planetary carrier (24).

7. The planetary reducer according to claim 3 or 5, **characterized in that** the first frame is a rigid carrier, comprising the first upper carrier plate (2) and the first lower carrier plate (3), the first upper carrier plate (2) and the first lower carrier plate (3) are fastened through bolts (17, 18), and spaces inside the first upper carrier plate (2) and the first lower carrier plate (3) are used for accommodating the first planetary gears (6) and the second frame;
the second frame is a flexible carrier, comprising a second upper carrier plate (4) and a second lower carrier plate (5), groove notches (15) are provided in the second upper carrier plate (4) and the second lower carrier plate (5), or the second upper carrier plate (4) and the second lower carrier plate (5) are separated at least two parts along their radial directions to form a split structure, and the split structure is used for inducing elastic deformation in the second upper carrier plate (4) and the second lower carrier plate (5), and can elastically increase pitch diameters of axle centers of the planetary gears on the second upper carrier plate (4) and the second lower carrier plate (5); and
shaft holes (10) are formed in corresponding positions of middles of the first frame and the second frame and used for allowing the sun gear (8) or an expansion tool to be inserted therein.

8. The planetary reducer according to claim 7, **characterized in that** corresponding first holes (13, 13a) are formed in the first upper carrier plate (2) and the first lower carrier plate (3), and the first upper carrier plate (2) and the first lower carrier plate (3) are fixedly connected by inserting first bolts (17) into the first holes (13, 13a); and corresponding second holes (14, 14a) are formed in the first upper carrier plate (2) and the second upper carrier plate (4) and in the first lower carrier plate (3) and the second lower carrier plate (5), the first upper carrier plate (2) and the second upper carrier plate (4), and the first lower carrier plate (3) and the second lower carrier plate (5), are fixedly connected respectively by inserting second bolts (18) into the second holes (14, 14a), diameters of the second holes (14) in the first frame are slightly larger than those of the bolts (17, 18), and therefore the second frame can still match with the second holes (14) therein after being expanded.

9. The planetary reducer according to claim 7, **characterized in that** the first lower carrier plate (3) comprises an annular body and support pillars (16), a plurality of receding holes (19) are formed in the annular body, and each support pillar (16) is placed at every two receding holes (19); and the second upper carrier plate (4) and the second lower carrier plate (5) each comprise an annular structure and three bosses radially extending along an outer wall of the annular structure, a through hole is formed in each boss to serve as a planetary shaft hole, and the first planetary gears (6) are fixed to the second frame through bearings.

10. A backlash eliminating installation method of the planetary reducer according to claim 3 or 5, **characterized by** comprising the steps: fastening the first frame through first bolts (17) and connecting the first frame to the second frame through second bolts (18) being in a loose and untightened state before a sun gear is installed on a planetary reducer assembly, and installing the second frame in the first frame in a clearance fit manner;
expanding pitch diameters of axle centers of planetary gears on the second frame by an expansion tool to reduce engagement clearances between the fixed ring gear (1) and the first planetary gears (6); and
when the first ring gear (1) and the first planetary gears (6) are in tight engagement, tightening the second bolts (18) to allow adjacent end faces of the first frame and the second frame to be in contact, and then installing other assemblies after the expansion tool is removed.
